(19) Europäisches Patentamt
European Patent Office
Office européen des brevets

(11) **EP 4 121 284 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **21713333.9**

(22) Anmeldetag: **15.03.2021**

(51) Internationale Patentklassifikation (IPC):
**B32B 7/022** (2019.01) **B32B 7/12** (2006.01)
**B32B 15/04** (2006.01) **B32B 15/20** (2006.01)
**B32B 15/18** (2006.01)

(52) Gemeinsame Patentklassifikation (CPC):
**B32B 7/022; B32B 7/12; B32B 15/043; B32B 15/18; B32B 15/20;** B32B 2250/02; B32B 2255/06; B32B 2255/26; B32B 2307/54; B32B 2307/546; B32B 2307/732; B32B 2439/70

(86) Internationale Anmeldenummer:
**PCT/EP2021/056477**

(87) Internationale Veröffentlichungsnummer:
**WO 2021/185731 (23.09.2021 Gazette 2021/38)**

(54) **VERPACKUNGSFOLIE**

PACKAGING FILM

FILM D'EMBALLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2020 AT 502322020**

(43) Veröffentlichungstag der Anmeldung:
**25.01.2023 Patentblatt 2023/04**

(73) Patentinhaber: **Constantia Teich GmbH 3205 Weinburg (AT)**

(72) Erfinder:
• **RESCH, Helmut 3203 Rabenstein (AT)**
• **TEUBENBACHER, Jasmin 3205 Weinburg (AT)**
• **KORNFELD, Martin 3400 Klosterneuburg (AT)**
• **SCHEDL, Adolf 3180 Lilienfeld (AT)**
• **GRUBER, Michael 3203 Rabenstein (AT)**
• **BÜTTNER, Stefan 92318 Neumarkt i. d. Oberpf. (DE)**
• **WEISS, Wolfgang 92637 Weiden in der Oberpfalz (DE)**
• **GEITNER, Werner 92637 Weiden (DE)**

(74) Vertreter: **Patentanwälte Pinter & Weiss OG Prinz-Eugen-Straße 70 1040 Wien (AT)**

(56) Entgegenhaltungen:
**EP-A1- 3 153 430 US-A1- 2017 225 148**

EP 4 121 284 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die gegenständliche Offenbarung betrifft Verpackungsfolien mit einer ersten Aluminiumfolie, einer zweiten Aluminiumfolie, und einer Verbindungsschicht, welche die erste Aluminiumfolie mit der zweiten Aluminiumfolie verbindet. Weiters betrifft die gegenständliche Offenbarung Verfahren zur Herstellung einer Verpackungsfolie.

Insbesondere für die Verpackung dreidimensional und gegebenenfalls figurativ geformter Lebensmittelprodukte, wie etwa Schokolade oder Pralinen in der Form von Osterhasen, Weihnachtsmännern oder ähnlichem, sind dünne Verpackungsfolien erforderlich, die sich gut und dauerhaft an die Außenkontur des Produkts anlegen und von sich aus dauerhaft in dieser Form bleiben. Auch zur Verpackung von Produkten mit "herkömmlichen" Formen, wie zum Beispiel Schokoladeriegeln, Konfekt oder Bonbons sind Verpackungsfolien mit diesen Eigenschaften vorteilhaft. Dies bedingt eine Verpackungsfolie, die beim Falten im Wesentlichen kein elastisches Rückstellverhalten aufweist (dies wird auch als "Deadfold-Verhalten" bezeichnet). Auch die maschinelle Verarbeitbarkeit ist ein wichtiges Kriterium bei der Herstellung solcher Verpackungsfolien.

Darüber hinaus erwarten Konsumenten beim Angreifen und Auswickeln der Verpackung einen haptischen Gefühlseindruck, der beispielsweise als "samtig" beschrieben wird. Diese Erwartungshaltung ist geprägt durch die derzeit in Verwendung stehenden dünnen Folien, bei denen eine Außenlage aus einem dünnen, bedruckten Papier und eine Innenlage aus Aluminium aneinanderkaschiert sind (oder umgekehrt, wobei das Papier die Innenlage ausbildet und das Aluminium die gegebenenfalls bedruckte Außenlage). Solche Folienverbunde werden seit langem verwendet.

Aufgrund gestiegener Anforderungen an die Rezyklierbarkeit von Verpackungsmaterialien werden Verbunde mit unterschiedlichen und unterschiedlich zu entsorgenden Materialien (also in dem Fall Aluminium und Papier) zunehmend als problematisch angesehen. Es ist daher ein Ziel der gegenständlichen Offenbarung, Alternativen zu den bisher verwendeten Verpackungsmaterialien bereitzustellen, die eine verbesserte Rezyklierbarkeit aufweisen.

Um jedoch bestehende und lange bewährte Verpackungsmaterialien ersetzen zu können, ist es erforderlich, mit neu entwickelten Materialien auch die vorteilhaften Eigenschaften der alten, bewährten Produkte zu erzielen. In der Praxis sind hierbei jedoch zahlreiche Hürden zu überwinden, da alternative, gut rezyklierbare Produkte die gewünschten Eigenschaften von sich aus meist nicht oder nur in eingeschränktem Maß mitbringen.

Beispielsweise wäre die Verwendung einer im Wesentlichen sortenreinen Aluminiumfolie hinsichtlich der Rezyklierbarkeit vorteilhaft, es hat sich jedoch herausgestellt, dass herkömmliche Aluminiumfolien die erforderliche Verarbeitbarkeit für diesen spezifischen Zweck nicht aufweisen und beispielsweise zu leicht einreißen. Auch lassen sich damit die von den Konsumenten gewünschten haptischen Eigenschaften nicht erzielen. Mit bekannten Verpackungsmaterialien ist es bislang nicht gelungen, die unterschiedlichen Anforderungen (insbesondere Rezyklierbarkeit, maschinelle Verarbeitbarkeit, Anschmiegsamkeit, Deadfoldverhalten, Haptik) gleichzeitig zu erreichen und zu optimieren.

EP 3 153 430 A1 offenbart ein mehrlagiges Verpackungsmaterial mit einer ersten Aluminiumschicht und einer mittels einer Kaschierschicht damit verbundenen zweiten Aluminiumschicht, bei dem die Biegesteifigkeit des Verpackungsmaterials über das Mischungsverhältnis zweier Klebstoffe der Kaschierschicht in einem weiten Bereich eingestellt werden kann.

In einem ersten Aspekt betrifft die gegenständliche Offenbarung eine Verpackungsfolie der eingangs genannten Art, wobei die erste und die zweite Aluminiumfolie jeweils einen Festigkeitszustand aufweisen, wobei die Festigkeitszustände unabhängig voneinander ausgewählt sind aus einem kaltverfestigten und rückgeglühten und/oder einem weichgeglühten Zustand, wobei durch eine Auswahl des durch Rückglühen erzielen Härtegrades der ersten und der zweiten Aluminiumfolie eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt sind, wobei die Zugkraft und die Biegesteifigkeit der Verpackungsfolie mit abnehmendem Härtegrad jeder Aluminiumfolie sinken und wobei die Bruchdehnung mit abnehmendem Härtegrad jeder Aluminiumfolie steigt.

In vorteilhafter Weise kann die gewünschte Zugkraft ($F_{max}$) zumindest 40 N in Längs- und Querrichtung betragen. Dies erlaubt es, die Verpackungsstationen mit einer höheren Geschwindigkeit und Taktzahl zu betreiben.

Die gegenständlichen Erfinder haben herausgefunden, dass es durch eine Kombination zweier unterschiedlicher Aluminiumfolien möglich ist, die Kennwerte der Verpackungsfolie so einzustellen, dass eine im Wesentlichen "sortenreine" Aluminiumfolie erhalten wird (lediglich mit einem geringen Klebstoffanteil), die den komplexen Anforderungen optimal entspricht. Dazu wird eine erste, teilweise rückgeglühte oder weichgeglühte Aluminiumfolie mit einer zweiten Aluminiumfolie kombiniert, wobei auch die zweite Aluminiumfolie aus dem kaltverfestigten Zustand zumindest teilweise rückgeglüht wurde. Durch den Grad der durch das Rückglühen bewirkten Rekristallisierung der zweiten Aluminiumfolie können die Eigenschaften der erhaltenen Verpackungsfolie so eingestellt werden, dass sie den komplexen Anforderungen entsprechen.

Bei von den gegenständlichen Erfindern durchgeführten Versuchen hat sich herausgestellt, dass eine Kombination zweier "weicher" (d.h. vollständig weichgeglühter) Aluminiumfolien zwar eine gute Dehnbarkeit erzielen lässt, jedoch ist die Zugfestigkeit und damit die erforderliche Zugkraft zu gering bzw. muss die Foliendicke übermäßig hoch gewählt werden, um die erforderliche Zugkraft zu erreichen, wodurch wiederum die Biegesteifigkeit zu hoch wird. Bei einer Kombination einer harten (d.h. voll durchgehärteten) mit einer weichen Aluminiumfolie wurde hingegen eine sehr gute Zugkraft erreicht, jedoch war die Dehnbarkeit zu gering und die Biegesteifigkeit zu hoch.

Die genauen Werte für die Dicken und die Zustände der Aluminiumfolien sind abhängig von der (den) verwendeten Aluminiumlegierung(en) und der spezifischen Anwendung. Der exakte Grad der Rekristallisierung der ersten und der zweiten Aluminiumfolie kann jedoch vom Fachmann, der Kenntnis der hierin offenbarten Lehren hat, anhand routinemäßiger Tests und Versuche für gegebene Aluminiumlegierungen herausgefunden werden.

Die hierin offenbarten Zustände, nämlich

- O ... weichgeglüht
- H ... kaltverfestigt
  - H1x ... nur kaltverfestigt
  - H2x ... kaltverfestigt und rückgeglüht
    - H22 ... kaltverfestigt und rückgeglüht - 1/4 hart
    - H24 ... kaltverfestigt und rückgeglüht - 1/2 hart
    - H26 ... kaltverfestigt und rückgeglüht - 3/4 hart
    - H28 ... kaltverfestigt und rückgeglüht - 4/4 hart

beziehen sich auf die Norm DIN EN 515 in der Version von Dezember 1993, "Aluminium und Aluminiumlegierungen - Halbzeug - Bezeichnung der Werkstoffzustände".

Für die Anwendung als Verpackungsfolie ist es wichtig, dass im Anschluss an die Folienwalzen (dies Entspricht einem Zustand H16-H19) eine thermische Behandlung durchgeführt wird. Neben der gewünschten Einstellung der mechanischen Eigenschaften der Folie bewirkt die thermische Behandlung eine Entfettung der Oberfläche, wobei Rückstände von Kühl- und Schmierstoffen entfernt werden.

Die Werte für die Zugkraft $F_{max}$, die Zugfestigkeit ($R_m$) und die Bruchdehnung ($A_{100}$) werden mittels Zugversuch gemäß der Norm DIN 50154:2019-09 ermittelt, wobei die Anfangsmesslänge ($L_0$) der Teststreifen (Anfangsbreite $b_0$ = 15 mm) 100 mm beträgt. Die in dieser Offenbarung angegebenen Werte der Zugkraft ($F_{max}$) beziehen sich, sofern nicht ausdrücklich etwas anderes angegeben ist, auf die absolute Zugfestigkeit des 15 mm breiten Teststreifens in N. Der Wert der Zugkraft ($F_{max}$) wird auch als Höchstkraft bezeichnet. Eine Umrechnung zwischen dem Wert für die Zugfestigkeit ($R_m$ in N/mm$^2$ bzw. MPa) und der flächenbezogenen Zugkraft ($F_{max}$ in N) kann anhand der Breite und der Dicke der getesteten Folie erfolgen.

Die Biegesteifigkeit (B) der Verpackungsfolie wird im Wesentlichen gemäß der Norm DIN 53121:2014-08 bestimmt, entweder im darin beschriebenen Zweipunktverfahren oder im darin beschriebenen Vierpunktverfahren. Dabei kann die Biegesteifigkeit B entweder gleichwertig als breitenbezogene Biegesteifigkeit Bs in Nm (bzw. mNm) oder als gemessene Biegesteifigkeit (oder Biegekraft) $B_F$ in N (bzw. mN) angegeben werden.

Das Vorgehen zur Bestimmung der Biegesteifigkeit des Verbundmaterials 1 wird am Beispiel einer Zweipunktmessung beschrieben. Eine einseitig eingespannte Probe des Verbundmaterials 3 wird in einem bestimmten Abstand I von einer drehbaren Einspannung durch eine senkrecht auf die Probenoberfläche wirkende Biegekraft F beansprucht, bis ein vorgegebener Biegewinkel $\alpha$ der Probe erreicht ist. Die Verformungsgeschwindigkeit bis zum Erreichen des Biegewinkels $\alpha$ wird dabei konstant gehalten. Der maximale Widerstand, den die Probe diesem Biegen entgegensetzt, wird als Biegesteifigkeit gemessen. Im Wesentlichen wird die absolute Biegesteifigkeit bzw. Biegekraft $B_F$ gemessen, die notwendig ist, um die Probe um den Biegewinkel $\alpha$ zu verbiegen. Daraus kann dann aus dem Zusammenhang

$$B_S = \frac{60}{\pi} \frac{B_F l^2}{\alpha b}$$

auf die breitenbezogen Biegesteifigkeit Bs umgerechnet werden.

Als Messbedingungen werden z.B. ein Biegewinkel $\alpha$ von 30°, eine Probenbreite b von 15 mm und ein Abstand I von Einspannung zum Kraftangriff von 1mm festgelegt. Alle hierin angeführten Werte beziehen sich auf diese Messbedingungen, wobei jeweils die Biegekraft $B_F$ in mN angegeben ist.

Messgeräte zur Bestimmung der Biegesteifigkeit B sind kommerziell erhältlich, z.B. von der Firma Lorentzen & Wettre.

In vorteilhafte Weise können die erste Aluminiumfolie und die zweite Aluminiumfolie einen unterschiedlichen Festigkeitszustand aufweisen. Dadurch lassen sich die Parameter feiner regulieren und das Auffinden geeigneter Verpackungsfolien durch Versuche und Tests wird durch die Reduktion der zu variierenden Parameter erleichtert.

In einer bevorzugten Ausführungsform kann die erste Aluminiumfolie einen weichgeglühten Zustand (O) aufweisen, wobei die zweite Aluminiumfolie einen kaltverfestigten und rückgeglühten Zustand aufweist, wobei durch eine Auswahl des durch Rückglühen erzielen Härtegrades der zweiten Aluminiumfolie eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt sind. In der Praxis erleichtert dies das Auffinden geeigneter Materialkombinationen und der Anteil der weichen Aluminiumfolie sorgt für sehr gute haptische Eigenschaften.

Um eine Verpackungsfolie mit noch höherer Qualität zu erhalten, kann eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 4 % in Längs- und Querrichtung und eine gewünschte Biegesteifigkeit ($B_F$) der Verpackungsfolie auf einen Wert von unter 55 mN in Längs- und Querrichtung eingestellt sein.

In einer vorteilhaften Ausführungsform kann die Gesamtdicke der Verpackungsfolie zwischen 12 $\mu$m und 30 $\mu$m, vorzugsweise zwischen 14 und 20 $\mu$m betragen. Die Verpackungsfolie erlaubt eine materialsparende Minimierung der Dicke, wobei etwa aus Qualitätsüberlegungen auch die Verwendung von Folien mit einer über dem erreichbaren Minimum liegenden Dicke vorteilhaft sein kann.

In vorteilhafter Weise können die Zustände der ersten und/oder zweiten Aluminiumfolie unabhängig voneinander ausgewählt sein aus weichgeglüht - O, kaltverfestigt und rückgeglüht - 1/4 hart (H22), kaltverfestigt und rückgeglüht - 1/2 hart (H24), kaltverfestigt und rückgeglüht - 3/4 hart (H26) und kaltverfestigt und rückgeglüht - 4/4 hart (H28). Die angeführten Bezeichnungen beziehen sich dabei auf die oben genannte Norm DIN EN 515:1993-12.

In einer vorteilhaften Ausführungsform kann die Verbindungsschicht einen Haftstoff aufweisen, der ausgewählt ist aus einem druckempfindlichen Kleber, einem Kaschierwachs, einem Trockenkaschierkleber, einer Extrusionskaschierung und einem Mischklebersystem.

In vorteilhafter Weise kann der Anteil der Verbindungsschicht an der Verpackungsfolie funktionell minimiert sein. Dies ist im Allgemeinen der Fall, wenn die Verbindungsschicht in einer Mächtigkeit von zwischen 1 und 7 g/m$^2$ vorliegt. "funktionell minimiert" bedeutet in diesem Zusammenhang, dass der Anteil durch Versuche und Tests so weit minimiert wird, wie es die Funktionalität erlaubt.

In einem weiteren Aspekt betrifft die gegenständliche Offenbarung ein Verfahren zur Herstellung einer Verpackungsfolie, wobei eine erste Aluminiumfolie mit einer zweiten Aluminiumfolie mittels einer Verbindungsschicht miteinander verbunden werden, wobei für die erste und die zweite Aluminiumfolie jeweils ein Festigkeitszustand ausgewählt wird, wobei die Festigkeitszustände unabhängig voneinander ausgewählt werden aus einem kaltverfestigten und rückgeglühten und einem weichgeglühten Zustand, wobei durch eine Auswahl des durch Rückglühen erzielen Härtegrades der ersten und der zweiten Aluminiumfolie eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt wird, wobei die Zugkraft ($F_{max}$) und die Biegesteifigkeit der Verpackungsfolie mit abnehmendem Härtegrad jeder Aluminiumfolie sinken und wobei die Bruchdehnung mit abnehmendem Härtegrad jeder Aluminiumfolie steigt.

In vorteilhafter Weise können als erste Aluminiumfolie und als zweite Aluminiumfolie Aluminiumfolien mit einem unterschiedlichen Festigkeitszustand ausgewählt werden.

In einer weiteren vorteilhaften Ausführungsform kann die erste Aluminiumfolie einen weichgeglühten Zustand (O) aufweisen, wobei die zweite Aluminiumfolie einen kaltverfestigten und rückgeglühten Zustand aufweist, wobei durch eine Auswahl des durch Rückglühen erzielen Härtegrades der zweiten Aluminiumfolie eine Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt werden, wobei die Zugkraft ($F_{max}$) und die Biegesteifigkeit der Verpackungsfolie mit abnehmendem Härtegrad der zweiten Aluminiumfolie sinken und wobei die Bruchdehnung mit abnehmendem Härtegrad der zweiten Aluminiumfolie steigt.

In vorteilhafter Weise kann eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 4 % in Längs- und Querrichtung und eine gewünschte Biegesteifigkeit ($B_F$) der Verpackungsfolie auf einen Wert von unter 55 mN in Längs- und Querrichtung eingestellt werden.

In vorteilhafter Weise kann die Gesamtdicke der Verpackungsfolie zwischen 12 $\mu$m und 30 $\mu$m, vorzugsweise zwischen 14 und 20 $\mu$m betragen.

In einer vorteilhaften Ausführungsform können die Zustände der ersten und/oder zweiten Aluminiumfolie unabhängig voneinander ausgewählt werden aus weichgeglüht - O, kaltverfestigt und rückgeglüht - 1/4 hart (H22), kaltverfestigt und rückgeglüht - 1/2 hart (H24), kaltverfestigt und rückgeglüht - 3/4 hart (H26) und kaltverfestigt und rückgeglüht - 4/4 hart (H28).

In einer weiteren vorteilhaften Ausführungsform kann als Verbindungsschicht ein Haftstoff, der ausgewählt ist aus einem druckempfindlichen Kleber, einem Kaschierwachs, einem Trockenkaschierkleber, einer Extrusionskaschierung und einem Mischklebersystem, gewählt werden.

In vorteilhafter Weise kann der Anteil der Verbindungsschicht an der Verpackungsfolie insbesondere auf einen Wert zwischen 1 und 7 g/m$^2$ funktionell minimiert werden.

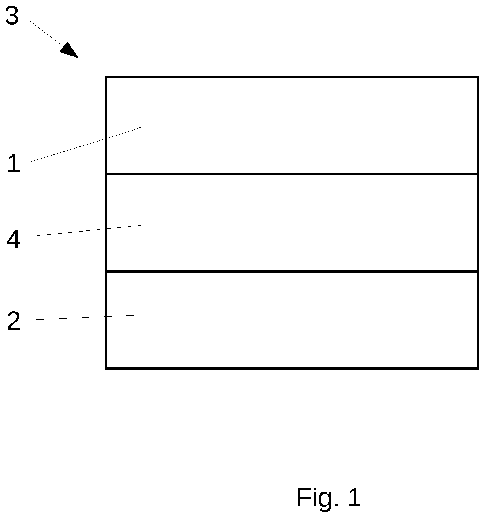

Die gegenständliche Erfindung wird nachfolgend unter Bezugnahme auf die Figur 1 näher erläutert, die beispielhaft, schematisch und nicht einschränkend eine vorteilhafte Ausgestaltung der Erfindung zeigt. Dabei zeigt Fig. 1 eine schematische Darstellung des Schichtaufbaus der Verpackungsfolie.

Der in Fig. 1 schematisch dargestellte Schichtaufbau einer Verpackungsfolie 3 umfasst eine erste Aluminiumfolie 1, eine zweite Aluminiumfolie 2 und eine Verbindungsschicht 4, welche zwischen der ersten Aluminiumfolie 1 und der zweiten Aluminiumfolie 2 angeordnet ist, und die beiden Aluminiumfolien 1 und 2 miteinander verbindet.

Die Verbindungsschicht 4 besteht aus einem Kaschierkleber, der ausgewählt ist aus einem druckempfindlichen Kleber, einem Kaschierwachs, einem Trockenkaschierkleber, einer Extrusionskaschierung und einem Mischklebersystem. Bevorzugt sind Mischklebersysteme, druckempfindliche Kleber und Kaschierwachse, da Trockenkaschierkleber zwischen zwei Barriereschichten problematisch hinsichtlich der Ausgasung und Blasenbildung sein können.

Zu Beispielen verwendbarer Kaschierwachse zählen unter anderem die von der Firma Paramelt BV, Niederlande, unter den Handelsbezeichnungen Paraflex Nowax™ L201 oder Paraflex™ L 7075 vertriebenen Produkte.

Mischklebersysteme können beispielsweise eine Mischung aus einem ersten aushärtenden Klebstoff und einem zweiten nicht aushärtenden Klebstoff, die beide vorzugsweise lebensmitteltauglich sind, verwendet. Das damit erhaltene Kaschiermittel wird für die Anwendung in der Verpackungsindustrie mit Lagendicken im Bereich von 0,5 g/m$^2$ bis 8 g/m$^2$ aufgetragen.

Als erster aushärtender Klebstoff kommen Klebstoffe auf Basis von Thermoplastischen Elastomeren, beispielsweise Klebstoffe auf Polyolefin Basis, Klebstoffe als Styrol-Blockcopolymer oder als Ethylenvinylacetat (EVA) Copolymer. Beispiele für solche Klebstoffe sind Styrol Butadien haltige Klebstoffe oder Ethylenvinylacetat (EVA) Copolymer mit einem Vinylacetatanteil bis zu 28%. Ebenso kommen Thermoplaste in Frage, beispielsweise Polyacrylat haltige Klebstoffe oder Ethylen-Copolymerisate, wie z.B. EthylenAcrylsäure (EAA). Der erste Klebstoff liegt in der Regel in flüssiger Form vor, beispielsweise als Lösung, Emulsion oder Dispersion des ersten Klebstoffs in einer flüssigen Phase, beispielsweise Wasser oder ein geeigneten flüssiges Lösungsmittel. Der erste Klebstoff kann einkomponentig sein, kann aber auch ein mehrkomponentiger Klebstoff sein.

Als zweiter nicht aushärtender Klebstoff kommen Klebstoffe auf Basis von Thermoplastischen Elastomeren, beispielsweise Klebstoffe auf Polyolefin Basis, Klebstoffe als Styrol-Blockcopolymer oder als Ethylenvinylacetat (EVA) Copolymer. Beispiele für solche Klebstoffe sind Styrol Butadien haltige Klebstoffe oder Ethylenvinylacetat (EVA) Copolymer mit einem Vinylacetatanteil bis zu 28%. Als zweiter nicht aushärtender Klebstoff kann insbesondere ein Haftklebstoff bzw. ein druckempfindlicher Klebstoff verwendet werden. Gängige druckempfindliche Klebstoffe sind niedermolekulare Polyacrylat haltige Klebstoffe oder Styrol Butadien haltige Klebstoff. Auch der zweite Klebstoff liegt in der Regel in flüssiger Form vor, beispielsweise als Lösung, Emulsion oder Dispersion des zweiten Klebstoffs in einer flüssigen Phase, beispielsweise Wasser oder ein geeigneten flüssiges Lösungsmittel.

Als Styrol Butadien haltiger Klebstoff wird insbesondere ein Klebstoff verstanden, der 60% bis 80% (Gewichtsanteil) Styrol Butadien enthält. Als Polyacrylat haltiger Klebstoff wird ein Klebstoff verstanden, der 50% bis 90% (Gewichtsanteil) Polyacrylat enthält. Diese Anteile sind nicht auf die Dispersion bezogen, sondern beziehen sich auf den Feststoffgehalt der Klebstoffe.

Die Mischung der beiden Klebstoffe liegt folglich ebenfalls in flüssige Form vor, wobei die flüssigen Phasen der beiden Klebstoffe verträglich sein müssen. Vorzugsweise wird für beide Klebstoffe dieselbe flüssige Phase verwendet, beispielsweise Wasser oder dasselbe Lösungsmittel. Der Mischung der beiden Klebstoffe kann zur Verarbeitung zusätzlich Wasser zugefügt werden kann. Ebenso können der Mischung in geringen Mengen, typischerweise in Summe maximal 10% bezogen auf das Gewicht der flüssigen Mischung auch geeignete Zusatzstoffe zugefügt werden, beispielsweise Stabilisatoren (max. 2%), Füllstoffe (max. 10%) und/oder Entschäumer (max. 1%).

Das Mischungsverhältnis M von ersten aushärtenden Klebstoff und vom zweiten, nicht aushärtenden Klebstoff im Kaschiermittel kann dabei je nach Anwendung und Materialauswahl in einem sehr breiten Bereich variieren. Hierbei sind Mischungsverhältnisse M zwischen den beiden Klebstoffen im Bereich von 10% erster, aushärtender Klebstoff zu 90 % zweiter, nicht aushärtender Klebstoff bis 90% erster, aushärtender Klebstoff zu 10 % zweiter, nicht aushärtender Klebstoff möglich. Das Mischungsverhältnis M ist auf den Feststoffgehalt der Klebstoffe bezogen.

Für ein konkretes Ausführungsbeispiel wurde ein kommerziell erhältlicher erster, aushärtender Klebstoff in Form eines Styrol Butadien haltigen Klebstoffs mit der Produktbezeichnung LANDOCOL 7170 Firma Svenska Lim AB und ein kommerziell erhältlicher zweiter, nicht aushärtender Klebstoff in Form eines Polyacrylat haltiger Klebstoff mit der Produktbezeichnung AQUENCE ENV 1626-24 der Firma Henkel mit einem Mischungsverhältnis von 50/30 (bezogen auf die Klebstoffmassen) als wässrige Lösung gemischt. Mit diesem Mischkleber wurden Verbindungsschichten 4 mit einer Materialstärke von etwa 1,8 g/m$^2$ hergestellt.

In einer weiteren Ausführungsform können die obenstehend als erster Klebstoff und zweiter Klebstoff beschriebenen Kaschierkleber auch ungemischt verwendet werden.

Die Hafteigenschaften des Klebers können in an sich bekannter Weise durch eine Oberflächenbeschichtung, etwa mit einem Vorlack oder Primer, verbessert werden. Derartige zusätzliche Schichten werden im Zusammenhang mit der gegenständlichen Offenbarung jeweils als ein Teil der Verbindungsschicht 4 angesehen.

Als Ausgangsmaterial für die Herstellung der ersten und der zweiten Aluminiumfolie kann eine beliebige, zur Folienherstellung geeignete Aluminiumlegierung verwendet werden, wobei Legierungen auf Eisenbasis, insbesondere Legierungen der Serie 8000 gemäß DIN EN 573-3:2019-10 bevorzugt sind. Beispielsweise kann eine oder können beide Aluminiumfolien aus einer Aluminiumlegierung bestehen, die ausgewählt sind aus EN AW-8021B (EN AW-Al Fe1,5) oder EN AW-8079 (EN AW-Al Fe1Si) - Bezeichnungen jeweils gemäß DIN EN 573-3:2019-10. Die gegenständliche Offenbarung ist keinesfalls auf diese beispielhaften Legierungen beschränkt, sondern umfasst alle Legierungen, die aus technischen Gründen für den Zweck geeignet und dem Fachmann bekannt sind.

Vor dem Kaschieren werden die erste und die zweite Aluminiumfolie jeweils mit bekannten Walzverfahren auf eine gewünschte Dicke gewalzt (bzw. in einer gewünschten Walzdicke bezogen), wobei die Dicke insbesondere zwischen $5,5\mu m$ und $20\mu m$ betragen kann. Übliche Werte für die Dicken der Aluminiumfolien sind beispielsweise $5,5\mu m$, $6\mu m$, $7\mu m$, $8\mu m$, $9\mu m$, $10\mu m$, $12\mu m$, $15\mu m$ oder $20\mu m$.

Die Gesamtdicke der Verbundfolie 3 ergibt sich aus der Summe der Dicken der ersten Aluminiumfolie 1, der zweiten Aluminiumfolie 2 und der Verbindungsschicht 4. Die Gesamtdicke der Verbundfolie 3 kann beispielsweise zwischen $12\mu m$ und $30\mu m$, vorzugsweise zwischen 14 und 20 $\mu m$ liegen.

Nach dem Walzen auf die gewünschte Dicke liegen die Aluminiumfolien in einem walzharten Zustand vor (d.h. Zustand H1x- nur kaltverfestigt ohne zusätzliche thermische Behandlung). Dieser Zustand wird üblicherweise vereinfachend auch als "hart" bezeichnet. Harte Aluminiumfolien erreichen zwar eine hohe Zugfestigkeit, haben jedoch eine sehr geringe Dehnbarkeit. Die Bruchdehnung liegt üblicherweise nur bei 1-2 %. Ein solcher Wert ist für die Verwendung als Verpackungsmaterial aufgrund der schlechten maschinellen Verarbeitbarkeit problematisch. Die gegenständlichen Erfinder haben herausgefunden, dass auch Verbundfolien mit mehreren Aluminiumfolien, von denen nur eine hart ist, eine sehr geringe Bruchdehnung (etwa zwischen 1-2 %) aufweisen.

Daher werden beide Aluminiumfolien vor dem Kaschieren einer Wärmebehandlung unterzogen. Bevorzugter Weise werden die erste Aluminiumfolie 1 und die zweite Aluminiumfolie 2 jeweils auf unterschiedliche Weise wärmebehandelt. Die optimale Wärmebehandlung einer Aluminiumfolie ist einerseits abhängig von der Dicke dieser einen Aluminiumfolie, aber auch von der Dicke und des Zustands der anderen Aluminiumfolie und von der Gesamtdicke der Verpackungsfolie. Die optimale Einstellung bzw. Auswahl der Dicken und Wärmebehandlungen erfordert daher die Durchführung von Experimenten und Tests, zu deren Durchführung der Fachmann bei Kenntnis der hierin offenbarten Lehren in der Lage ist.

Ziel ist es, eine Kombination aus einer ersten Aluminiumfolie 1 und einer zweiten Aluminiumfolie 2 zu finden, die bei einer gegebenen Verbindungsschicht 4 den folgenden Kriterien entspricht:

1. Die Zugkraft $F_{max}$ eines 15mm breiten Teststreifens (gemäß DIN 50154:2019-09) beträgt zumindest 20 N, vorzugsweise zumindest 40 N, um die maschinelle Verarbeitbarkeit zu verbessern

2. Die Bruchdehnung $A_{100}$ eines 15mm breiten Teststreifens bei einer Einspannlänge vom 100 mm (gemäß DIN 50154:2019-09) beträgt zumindest 3 %, vorzugsweise zumindest 4%

3. Die Biegesteifigkeit $B_F$, gemessen nach den hierin in der Einleitung beschriebenen Verfahren beträgt maximal 70 mN, vorzugsweise maximal 55 mN.

Um eine geeignete Verbundfolie aufzufinden, die allen diesen Kriterien entspricht, können beispielsweise bei gewählter Materialdicke entsprechende Testserien hergestellt werden, die sich jeweils hinsichtlich der mithilfe der Wärmebehandlung bewirkten Zustände unterscheiden. Falls auf diese Weise mehrere geeignete Kandidaten aufgefunden werden, kann durch einen manuell durchgeführten Test der gefühlten Haptik eine weitere Auswahl getroffen werden.

Um die Anzahl der herzustellenden Materialmuster zu verringern, kann das folgende vorteilhafte Verfahren durchgeführt werden:

1. Auswahl einer Legierung und einer Dicke der ersten Aluminiumfolie 1

2. Auswahl einer Legierung und einer Dicke der zweiten Aluminiumfolie 2

3. Auswahl eines geeigneten Kaschierklebersystems

4. Wärmebehandeln der ersten Aluminiumfolie 1 auf einen weichgeglühten Zustand O

5. Aufteilen der zweiten Aluminiumfolie 2 in mehrere Muster und weichglühen der Muster auf unterschiedliche Rekristallisierungsgrade bzw. Zustände (z.B. weichgeglüht - O, kaltverfestigt und rückgeglüht - 1/4 hart (H22), kaltverfestigt und rückgeglüht - 1/2 hart (H24), kaltverfestigt und rückgeglüht - 3/4 hart (H26), kaltverfestigt und rückgeglüht - 4/4 hart (H28)).

6. Herstellen mehrerer Muster der Verbundfolie mit immer der ersten Aluminiumfolie 1 und jeweils einem unterschiedlichen Muster der zweiten Aluminiumfolie 2

7. Testen der Eigenschaften der unterschiedlichen Muster (Zugfestigkeit $R_m$, Zugkraft $F_{max}$, Bruchdehnung $A_{100}$ und Biegesteifigkeit $B_F$)

8. Bewerten der Muster hinsichtlich der Eigenschaften und Auswählen geeigneter Kandidaten

Sollte das Ergebnis der Testserie aus irgendwelchen Gründen nicht zufriedenstellend sein, kann die Testserie mit einer anderen Kombination an Schichtdicken, mit einer anderen Kombination an Legierungen und/oder mit einem anderen Klebersystem wiederholt werden.

Die Erfinder haben festgestellt, dass sich die gemessenen Werte von im Labor hergestellten Verpackungsfolien mit einer ersten Aluminiumfolie, einer "händisch" aufgetragenen Verbindungsschicht und einer zweiten Aluminiumfolie ("Laborkaschierungen") überraschender Weise von aufbaumäßig identischen Verpackungsfolien unterscheiden, die in der Produktion hergestellt wurden (Produktionskaschierungen). Beispielsweise waren die Werte der Dehnung der Laborkaschierungen durchgehend um etwa 20-25% höher, als die Werte, die dann schließlich mit den Produktionskaschierungen erreicht wurden. Die Werte der Biegesteifigkeit waren bei den Produktionskaschierungen um etwa 25-30% höher, als die Werte der entsprechenden Laborkaschierungen.

Vor Umsetzung der aufwändigen Tests in der Produktion ist bei der Auswahl bevorzugter Materialkombinationen also zu berücksichtigen, dass Verpackungsfolien in der Serienproduktion weniger dehnbar und steifer sind, als entsprechende Laborkaschierungen. Es wird vermutet, dass diese unterschiedlichen Eigenschaften insbesondere aufgrund der Lagerung der Produktionskaschierungen auf großen Rollen und den dadurch entstehenden Druck bewirkt werden. Jedenfalls ist der Fachmann, der Kenntnis der hierin offenbarten Lehren hat, von sich aus in der Lage, diese Erkenntnis bei der Auswahl geeigneter Verbundfolien zu berücksichtigen. Die hierin offenbarten Werte beziehen sich jeweils auf Produktionskaschierungen.

**Patentansprüche**

1.  Verpackungsfolie mit einer ersten Aluminiumfolie, einer zweiten Aluminiumfolie, und einer Verbindungsschicht, welche die erste Aluminiumfolie mit der zweiten Aluminiumfolie verbindet, **dadurch gekennzeichnet, dass** die erste und die zweite Aluminiumfolie jeweils einen Festigkeitszustand aufweisen, wobei die Festigkeitszustände unabhängig voneinander ausgewählt sind aus einem kaltverfestigten und rückgeglühten und/oder einem weichgeglühten Zustand, wobei durch eine Auswahl des durch Rückglühen erzielen Härtegrades der ersten und der zweiten Aluminiumfolie eine gewünschte Zugkraft ($F_{max}$) der Verpackungsfolie (gemäß Norm DIN 50154:2019-09) auf einen Wert von zumindest 20 N in Längs- und Querrichtung, eine gewünschte Bruchdehnung ($A_{100}$) der Verpackungsfolie (gemäß Norm DIN 50154:2019-09) auf einen Wert von mindestens 3 % in Längs- und Querrichtung und eine gewünschte Biegesteifigkeit ($B_F$) der Verpackungsfolie (gemäß Norm DIN 53121:2014-08) auf einen Wert von unter 70 mN in Längs- und Querrichtung eingestellt sind, wobei die Zugkraft und die Biegesteifigkeit der Verpackungsfolie mit abnehmendem Härtegrad jeder Aluminiumfolie sinken und wobei die Bruchdehnung mit abnehmendem Härtegrad jeder Aluminiumfolie steigt.

2.  Verpackungsfolie nach Anspruch 1, **dadurch gekennzeichnet, dass** die erste Aluminiumfolie und die zweite Aluminiumfolie einen unterschiedlichen Festigkeitszustand aufweisen.

3.  Verpackungsfolie nach Anspruch 1 oder 2, **dadurch gekennzeichnet, dass** die erste Aluminiumfolie einen weichgeglühten Zustand (O) aufweist, wobei die zweite Aluminiumfolie einen kaltverfestigten und rückgeglühten Zustand aufweist, wobei durch eine Auswahl des durch Rückglühen erzielen Härtegrades der zweiten Aluminiumfolie eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt sind.

4. Verpackungsfolie nach einem der Ansprüche 1 bis 3, **dadurch gekennzeichnet, dass** eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 4 % in Längs- und Querrichtung und eine gewünschte Biegesteifigkeit ($B_F$) der Verpackungsfolie auf einen Wert von unter 55 mN in Längs- und Querrichtung eingestellt sind.

5. Verpackungsfolie nach einem der Ansprüche 1 bis 4, **dadurch gekennzeichnet, dass** die Gesamtdicke der Verpackungsfolie zwischen 12 $\mu$m und 30 $\mu$m, vorzugsweise zwischen 14 und 20 $\mu$m beträgt.

6. Verpackungsfolie nach einem der Ansprüche 1 bis 5, **dadurch gekennzeichnet, dass** die Zustände der ersten und/oder der zweiten Aluminiumfolie unabhängig voneinander ausgewählt sind aus weichgeglüht - O, kaltverfestigt und rückgeglüht - 1/4 hart (H22), kaltverfestigt und rückgeglüht - 1/2 hart (H24), kaltverfestigt und rückgeglüht - 3/4 hart (H26) und kaltverfestigt und rückgeglüht - 4/4 hart (H28).

7. Verpackungsfolie nach einem der Ansprüche 1 bis 6, **dadurch gekennzeichnet, dass** die Verbindungsschicht einen Haftstoff aufweist, der ausgewählt ist aus einem druckempfindlichen Kleber, einem Kaschierwachs, einem Trockenkaschierkleber, einer Extrusionskaschierung und einem Mischklebersystem.

8. Verpackungsfolie nach einem der Ansprüche 1 bis 7, **dadurch gekennzeichnet, dass** der Anteil der Verbindungsschicht an der Verpackungsfolie funktionell minimiert ist und insbesondere zwischen 1 und 7 g/m$^2$ beträgt.

9. Verfahren zur Herstellung einer Verpackungsfolie, wobei eine erste Aluminiumfolie mit einer zweiten Aluminiumfolie mittels einer Verbindungsschicht miteinander verbunden werden, **dadurch gekennzeichnet, dass** für die erste und die zweite Aluminiumfolie jeweils ein Festigkeitszustand ausgewählt wird, wobei die Festigkeitszustände unabhängig voneinander ausgewählt werden aus einem kaltverfestigten und rückgeglühten und einem weichgeglühten Zustand, wobei durch eine Auswahl des durch Rückglühen erzielen Härtegrades der ersten und der zweiten Aluminiumfolie eine gewünschte Zugkraft ($F_{max}$) der Verpackungsfolie (gemäß Norm DIN 50154:2019-09) auf einen Wert von zumindest 20 N in Längs- und Querrichtung, eine gewünschte Bruchdehnung ($A_{100}$) der Verpackungsfolie (gemäß Norm DIN 50154:2019-09) auf einen Wert von mindestens 3 % in Längs- und Querrichtung und eine gewünschte Biegesteifigkeit ($B_F$) der Verpackungsfolie (gemäß Norm DIN 53121:2014-08) auf einen Wert von unter 70 mN in Längs- und Querrichtung eingestellt wird, wobei die Zugkraft und die Biegesteifigkeit der Verpackungsfolie mit abnehmendem Härtegrad jeder Aluminiumfolie sinken und wobei die Bruchdehnung mit abnehmendem Härtegrad jeder Aluminiumfolie steigt

10. Verfahren nach Anspruch 9, **dadurch gekennzeichnet, dass** als erste Aluminiumfolie und als zweite Aluminiumfolie Aluminiumfolien mit einem unterschiedlichen Festigkeitszustand ausgewählt werden.

11. Verfahren nach Anspruch 9 oder 10, **dadurch gekennzeichnet, dass** die erste Aluminiumfolie einen weichgeglühten Zustand (O) aufweist, wobei die zweite Aluminiumfolie einen kaltverfestigten und rückgeglühten Zustand aufweist, wobei durch eine Auswahl des durch Rückglühen erzielen Härtegrades der zweiten Aluminiumfolie eine gewünschte Zugkraft ($F_{max}$) der Verpackungsfolie auf einen Wert von zumindest 20 N in Längs- und Querrichtung, eine gewünschte Bruchdehnung ($A_{100}$) der Verpackungsfolie auf einen Wert von mindestens 3 % in Längs- und Querrichtung und eine gewünschte Biegesteifigkeit ($B_F$) der Verpackungsfolie auf einen Wert von unter 70 mN in Längs- und Querrichtung eingestellt werden, wobei die Zugfestigkeit und die Biegesteifigkeit der Verpackungsfolie mit abnehmendem Härtegrad der zweiten Aluminiumfolie sinken und wobei die Bruchdehnung mit abnehmendem Härtegrad der zweiten Aluminiumfolie steigt.

12. Verfahren nach einem der Ansprüche 9 bis 11, **dadurch gekennzeichnet, dass** eine gewünschte Zugfestigkeit ($R_m$) der Verpackungsfolie auf einen Wert von zumindest 20 N in Längs- und Querrichtung, eine gewünschte Bruchdehnung ($A_{100}$) der Verpackungsfolie auf einen Wert von mindestens 4 % in Längs- und Querrichtung und eine gewünschte Biegesteifigkeit ($B_F$) der Verpackungsfolie auf einen Wert von unter 55 mN in Längs- und Querrichtung eingestellt werden.

13. Verfahren nach einem der Ansprüche 9 bis 12, **dadurch gekennzeichnet, dass** die Gesamtdicke der Verpackungsfolie zwischen 12 $\mu$m und 30 $\mu$m, vorzugsweise zwischen 14 und 20 $\mu$m beträgt.

14. Verfahren nach einem der Ansprüche 9 bis 13, **dadurch gekennzeichnet, dass** die Zustände der ersten und/oder zweiten Aluminiumfolie unabhängig voneinander ausgewählt werden aus weichgeglüht - O, kaltverfestigt und rückgeglüht - 1/4 hart (H22), kaltverfestigt und rückgeglüht - 1/2 hart (H24), kaltverfestigt und rückgeglüht - 3/4 hart (H26) und kaltverfestigt und rückgeglüht - 4/4 hart (H28).

15. Verfahren nach einem der Ansprüche 9 bis 14, **dadurch gekennzeichnet, dass** als Verbindungsschicht ein Haftstoff, der ausgewählt ist aus einem druckempfindlichen Kleber, einem Kaschierwachs, einem Trockenkaschierkleber, einer Extrusionskaschierung und einem Mischklebersystem, gewählt wird.

16. Verfahren nach einem der Ansprüche 9 bis 15, **dadurch gekennzeichnet, dass** Anteil der Verbindungsschicht an der Verpackungsfolie insbesondere auf einen Wert zwischen 1 und 7 g/m$^2$ funktionell minimiert wird.

**Claims**

1. Packaging foil having a first aluminum foil, a second aluminum foil, and a bonding layer which connects the first aluminum foil to the second aluminum foil, **characterized in that** the first and the second aluminum foil each have a strength state, wherein the strength states are each selected independently of one another from a work-hardened and re-annealed and/or a soft-annealed state, wherein, by selection of the degree of hardness, achieved by re-annealing, of the first and of the second aluminum foil, a desired tensile force ($F_{max}$) of the packaging foil (according to standard DIN 50154:2019-09) is set to a value of at least 20 N in the longitudinal and transverse direction, a desired elongation at break ($A_{100}$) of the packaging foil (according to standard DIN 50154:2019-09) is set to a value of at least 3% in the longitudinal and transverse direction, and a desired bending stiffness ($B_F$) of the packaging foil (according to standard DIN 50154:2019-09) is set to a value below 70 mN in the longitudinal and transverse direction, wherein the tensile force and the bending stiffness of the packaging foil decrease with decreasing degree of hardness of each aluminum foil, and wherein the elongation at break increases with decreasing degree of hardness of each aluminum foil.

2. Packaging foil according to claim 1, **characterized in that** the first aluminum foil and the second aluminum foil have a different strength state.

3. Packaging foil according to claim 1 or 2, **characterized in that** the first aluminum foil has a soft-annealed state (O), wherein the second aluminum foil has a work-hardened and re-annealed state, wherein, by selection of the degree of hardness, achieved by re-annealing, of the second aluminum foil, a desired tensile force ($F_{max}$) of the packaging foil is set to a value of at least 20 N in the longitudinal and transverse direction, a desired elongation at break ($A_{100}$) of the packaging foil is set to a value of at least 3% in the longitudinal and transverse direction, and a desired bending stiffness ($B_F$) of the packaging foil is set to a value of less than 70 mN in the longitudinal and transverse direction.

4. Packaging foil according to one of claims 1 to 3, **characterized in that** a desired tensile force ($F_{max}$) of the packaging foil is set to a value of at least 20 N in the longitudinal and transverse direction, a desired elongation at break ($A_{100}$) of the packaging foil is set to a value of at least 4% in the longitudinal and transverse direction, and a desired bending stiffness ($B_F$) of the packaging foil is set to a value below 55 mN in the longitudinal and transverse direction.

5. Packaging foil according to one of claims 1 to 4, **characterized in that** the total thickness of the packaging foil is between 12 $\mu$m and 30 $\mu$m, and preferably between 14 and 20 $\mu$m.

6. Packaging foil according to one of claims 1 to 5, **characterized in that** the states of the first and/or second aluminum foils are selected independently of one another from soft-annealed - O, work-hardened and re-annealed - 1/4 hard (H22), work-hardened and re-annealed - 1/2 hard (H24), work-hardened and re-annealed - 3/4 hard (H26), and work-hardened and re-annealed - 4/4 hard (H28).

7. Packaging foil according to one of claims 1 to 6, **characterized in that** the bonding layer has an adhesive which is selected from a pressure-sensitive adhesive, a laminating wax, a dry laminating adhesive, an extrusion lamination, and a mixed adhesive system.

8. Packaging foil according to one of claims 1 to 7, **characterized in that** the proportion of the bonding layer in the packaging foil is functionally minimized and in particular is between 1 and 7 g/m$^2$.

9. Method for producing a packaging foil, wherein a first aluminum foil and a second aluminum foil are connected to one another by means of a bonding layer, **characterized in that** a strength state is selected in each case for the first and the second aluminum foil, wherein the strength states are selected independently of one another from a work-hardened and re-annealed and a soft-annealed state, wherein, by selection of the degree of hardness, achieved by re-annealing, of the first and of the second aluminum foil, a desired tensile force ($F_{max}$) of the packaging foil (according to standard DIN 50154:2019-09) is set to a value of at least 20 N in the longitudinal and transverse direction, a desired elongation at break ($A_{100}$) of the packaging foil (according to standard DIN 50154:2019-09) is set to a value of at least 3% in the longitudinal and transverse direction, and a desired bending stiffness ($B_F$) of the packaging foil (according to standard DIN 50154:2019-09) is set to a value of less than 70 mN in the longitudinal and transverse direction, wherein the tensile force and the bending stiffness of the packaging foil decrease with decreasing degree of hardness of each aluminum foil, and wherein the elongation at break increases with decreasing degree of hardness of each aluminum foil.

10. Method according to claim 9, **characterized in that** aluminum foils with a different strength state are selected as the first aluminum foil and as the second aluminum foil.

11. Method according to claim 9 or 10, **characterized in that** the first aluminum foil has a soft-annealed state (O), wherein the second aluminum foil has a work-hardened and re-annealed state, wherein, by selection of the degree of hardness, achieved by re-annealing, of the second aluminum foil, a desired tensile force ($F_{max}$) of the packaging foil is set to a value of at least 20 N in the longitudinal and transverse direction, a desired elongation at break ($A_{100}$) of the packaging foil is set to a value of at least 3% in the longitudinal and transverse direction, and a desired bending stiffness ($B_F$) of the packaging foil is set to a value below 70 mN in the longitudinal and transverse direction, wherein the tensile strength and the bending stiffness of the packaging foil decrease with decreasing degree of hardness of the second aluminum foil, and wherein the elongation at break increases with decreasing degree of hardness of the second aluminum foil.

12. Method according to one of claims 9 to 11, **characterized in that** a desired tensile strength ($R_m$) of the packaging foil is set to a value of at least 20 N in the longitudinal and transverse direction, a desired elongation at break ($A_{100}$) of the packaging foil is set to a value of at least 4% in the longitudinal and transverse direction, and a desired bending stiffness ($B_F$) of the packaging foil is set to a value below 55 mN in the longitudinal and transverse direction.

13. Method according to one of claims 9 to 12, **characterized in that** the total thickness of the packaging foil is between 12 $\mu$m and 30 $\mu$m, and preferably between 14 and 20 $\mu$m.

14. Method according to one of claims 9 to 13, **characterized in that** the states of the first and/or second aluminum foil are selected independently of one another from soft-annealed - O, work-hardened and re-annealed - 1/4 hard (H22), work-hardened and re-annealed - 1/2 hard (H24), work-hardened and re-annealed - 3/4 hard (H26), and work-hardened and re-annealed - 4/4 hard (H28).

15. Method according to one of claims 9 to 14, **characterized in that** an adhesive selected from a pressure-sensitive adhesive, a laminating wax, a dry laminating adhesive, an extrusion lamination, and a mixed adhesive system is selected as the bonding layer.

16. Method according to one of claims 9 to 15, **characterized in that** the proportion of the bonding layer in the packaging foil is functionally minimized in particular to a value between 1 and 7 g/m$^2$.

## Revendications

1. Film d'emballage comportant un premier film d'aluminium, un second film d'aluminium et une couche de liaison, qui relie le premier film d'aluminium au second film d'aluminium, **caractérisé en ce que** les premier et second films d'aluminium présentent chacun un état de résistance, dans lequel les états de résistance sont sélectionnés indépendamment l'un de l'autre parmi un état consolidé à froid et recuit et/ou un état recuit doux, dans lequel, en sélectionnant le degré de dureté, obtenu par recuit, des premier et second films d'aluminium, une force de traction ($F_{max}$) souhaitée du film d'emballage (conformément à la norme DIN 50154:2019-09) est ajustée à une valeur d'au moins 20 N dans le sens longitudinal et transversal, un allongement à la rupture ($A_{100}$) souhaité du film d'emballage (conformément à la norme DIN 50154:2019-09) est ajusté à une valeur d'au moins 3 % dans le sens longitudinal et transversal et une résistance à la flexion ($B_F$) souhaitée du film d'emballage (conformément à la norme DIN 53121:2014-08) est ajustée à une valeur inférieure à 70 mN dans le sens longitudinal et transversal, la force de traction et la résistance à la flexion du film d'emballage diminuant lorsque le degré de dureté de chaque film d'aluminium diminue et l'allongement à la rupture augmentant lorsque le degré de dureté de chaque film d'aluminium diminue.

2. Film d'emballage selon la revendication 1, **caractérisé en ce que** le premier film d'aluminium et le second film d'aluminium présentent un état de résistance différent.

3. Film d'emballage selon la revendication 1 ou 2, **caractérisé en ce que** le premier film d'aluminium présente un état recuit doux (O), le second film d'aluminium présentant un état consolidé à froid et recuit, dans lequel, en sélectionnant le degré de dureté, obtenu par recuit, du second film d'aluminium, une force de traction ($F_{max}$) souhaitée du film d'emballage est ajustée à une valeur d'au moins 20 N dans le sens longitudinal et transversal, un allongement à la rupture ($A_{100}$) souhaité du film d'emballage est ajusté à une valeur d'au moins 3 % dans le sens longitudinal et transversal et une résistance à la flexion ($B_F$) souhaitée du film d'emballage est ajustée à une valeur inférieure à 70 mN dans le sens longitudinal et transversal.

4. Film d'emballage selon l'une des revendications 1 à 3,
**caractérisé en ce qu'**une force de traction ($F_{max}$) souhaitée du film d'emballage est ajustée à une valeur d'au moins 20 N dans le sens longitudinal et transversal, un allongement à la rupture ($A_{100}$) souhaité du film d'emballage est ajusté à une valeur d'au moins 4 % dans le sens longitudinal et transversal et une résistance à la flexion ($B_F$) souhaitée du film d'emballage est ajustée à une valeur inférieure à 55 mN dans le sens longitudinal et transversal.

5. Film d'emballage selon l'une des revendications 1 à 4,
**caractérisé en ce que** l'épaisseur totale du film d'emballage est comprise entre 12 et 30 $\mu$m, de préférence entre 14 et 20 $\mu$m.

6. Film d'emballage selon l'une des revendications 1 à 5,
**caractérisé en ce que** les états du premier et/ou du second film d'aluminium sont sélectionnés indépendamment l'un de l'autre parmi un état recuit doux-O, un état consolidé à froid et recuit-1/4 dur (H22), un état consolidé à froid et recuit-1/2 dur (H24), un état consolidé à froid et recuit-3/4 dur (H26) et un état consolidé à froid et recuit-4/4 dur (H28).

7. Film d'emballage selon l'une des revendications 1 à 6,
**caractérisé en ce que** la couche de liaison présente un matériau dur sélectionné parmi un adhésif sensible à la pression, une cire de contrecollage, un adhésif de contrecollage à sec, un contrecollage par extrusion et un système adhésif mixte.

8. Film d'emballage selon l'une des revendications 1 à 7,
**caractérisé en ce que** la partie de la couche de liaison sur le film d'emballage est réduite fonctionnellement au minimum et est en particulier comprise entre 1 et 7 g/m$^2$.

9. Procédé de fabrication d'un film d'emballage, dans lequel un premier film d'aluminium et un second film d'aluminium sont reliés l'un à l'autre à l'aide d'une couche de liaison, **caractérisé en ce qu'**un état de résistance est sélectionné pour chacun des premier et second films d'aluminium, dans lequel les états de résistance sont sélectionnés indépendamment l'un de l'autre parmi un état consolidé à froid et recuit et un état recuit doux, dans lequel, en sélectionnant le degré de dureté, obtenu par recuit, des premier et second films d'aluminium, une force de traction ($F_{max}$) souhaitée du film d'emballage (conformément à la norme DIN 50154:2019-09) est ajustée à une valeur d'au moins 20 N dans le sens longitudinal et transversal, un allongement à la rupture ($A_{100}$) souhaité du film d'emballage (conformément à la norme DIN 50154:2019-09) est ajusté à une valeur d'au moins 3 % dans le sens longitudinal et transversal et une résistance à la flexion ($B_F$) souhaitée du film d'emballage (conformément à la norme DIN 53121:2014-08) est ajustée à une valeur inférieure à 70 mN dans le sens longitudinal et transversal, la force de traction et la résistance à la flexion du film d'emballage diminuant lorsque le degré de dureté de chaque film d'aluminium diminue et l'allongement à la rupture augmentant lorsque le degré de dureté de chaque film d'aluminium diminue.

10. Procédé selon la revendication 9, **caractérisé en ce que** des films d'aluminium présentant un état de résistance différent sont sélectionnés comme premier film d'aluminium et second film d'aluminium.

11. Procédé selon la revendication 9 ou 10, **caractérisé en ce que** le premier film d'aluminium présente un état recuit doux (O), le second film d'aluminium présentant un état consolidé à froid et recuit, dans lequel, en sélectionnant le degré de dureté, obtenu par recuit, du second film d'aluminium, une force de traction ($F_{max}$) souhaitée du film

d'emballage est ajustée à une valeur d'au moins 20 N dans le sens longitudinal et transversal, un allongement à la rupture ($A_{100}$) souhaité du film d'emballage est ajusté à une valeur d'au moins 3 % dans le sens longitudinal et transversal et une résistance à la flexion ($B_F$) souhaitée du film d'emballage est ajustée à une valeur inférieure à 70 mN dans le sens longitudinal et transversal, la résistance à la traction et la résistance à la flexion du film d'emballage diminuant lorsque le degré de dureté du second film d'aluminium diminue et l'allongement à la rupture augmentant lorsque le degré de dureté du second film d'aluminium diminue.

12. Procédé selon l'une des revendications 9 à 11, **caractérisé en ce qu'**une résistance à la traction ($R_m$) souhaitée du film d'emballage est ajustée à une valeur d'au moins 20 N dans le sens longitudinal et transversal, un allongement à la rupture ($A_{100}$) souhaité du film d'emballage est ajusté à une valeur d'au moins 4 % dans le sens longitudinal et transversal et une résistance à la flexion ($B_F$) souhaitée du film d'emballage est ajustée à une valeur inférieure à 55 mN dans le sens longitudinal et transversal.

13. Procédé selon l'une des revendications 9 à 12, **caractérisé en ce que** l'épaisseur totale du film d'emballage est comprise entre 12 et 30 $\mu$m, de préférence entre 14 et 20 $\mu$m.

14. Procédé selon l'une des revendications 9 à 13, **caractérisé en ce que** les états du premier et/ou du second film d'aluminium sont sélectionnés indépendamment l'un de l'autre parmi un état recuit doux-O, un état consolidé à froid et recuit-1/4 dur (H22), un état consolidé à froid et recuit-1/2 dur (H24), un état consolidé à froid et recuit-3/4 dur (H26) et un état consolidé à froid et recuit-4/4 dur (H28).

15. Procédé selon l'une des revendications 9 à 14, **caractérisé en ce qu'**un adhésif, sélectionné parmi un adhésif sensible à la pression, une cire de contrecollage, un adhésif de contrecollage à sec, un contrecollage par extrusion et un système adhésif mixte, est choisi comme couche de liaison.

16. Procédé selon l'une des revendications 9 à 15, **caractérisé en ce que** la partie de la couche de liaison sur le film d'emballage est réduite fonctionnellement au minimum, en particulier à une valeur comprise entre 1 et 7 g/m$^2$.

3

1

4

2

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3153430 A1